# EUROPÄISCHE PATENTSCHRIFT

(11) **EP 1 846 212 B1**
(45) Veröffentlichungstag und Bekanntmachung des Hinweises auf die Patenterteilung: **04.06.2008**
(21) Anmeldenummer: 06706546.6
(22) Anmeldetag: 01.02.2006
(51) Int. Cl.: B29C 44/46, C08J 9/00

(54) **VERFAHREN UND VORRICHTUNG ZUR HERSTELLUNG VON POLYURETHAN-BLOCKSCHAUM**
METHOD AND DEVICE FOR PRODUCING POLYURETHANE FOAM SLAB STOCK
PROCEDE ET DISPOSITIF POUR PRODUIRE UNE PLAQUE DE MOUSSE EN POLYURETHANE

(30) Priorität: 04.02.2005 DE 102005005151
(43) Veröffentlichungstag der Anmeldung: 24.10.2007
(73) Patentinhaber: Hennecke GmbH, 51379 Leverkusen (DE)
(72) Erfinder: SCHAMBERG, Martin, 53757 Sankt Augustin (DE); WIRTH, Jürgen, 51147 Köln (DE)
(74) Vertreter: Gosdin, Michael
(86) Internationale Anmeldenummer: PCT/EP2006/000866
(87) Internationale Veröffentlichungsnummer: WO 2006/082036

(56) Entgegenhaltungen:
- EP-A- 0 385 301
- EP-A- 1 205 290

## Beschreibung

Die Erfindung betrifft ein Verfahren und eine Vorrichtung zur Herstellung von Polyurethan-Blockschaum.

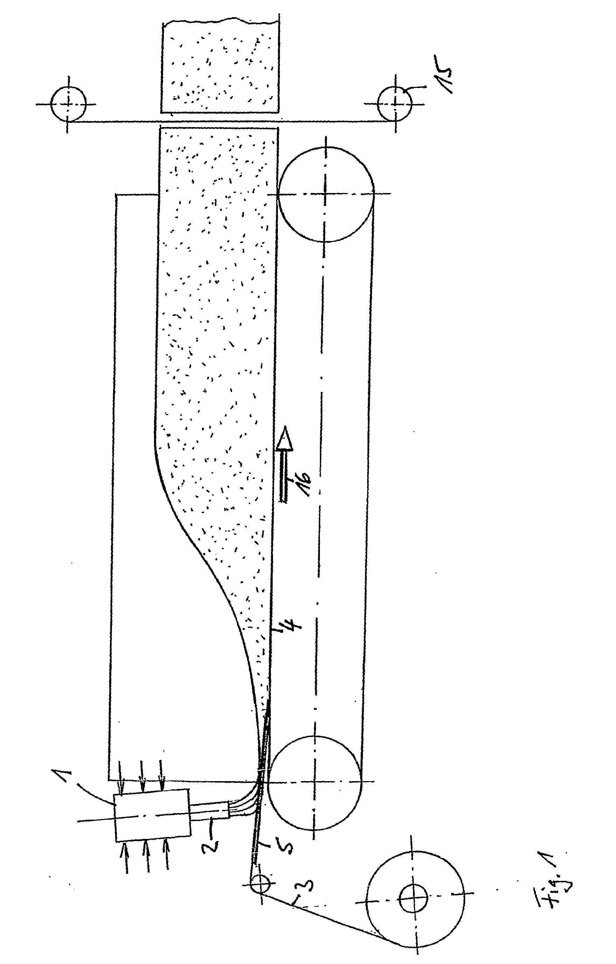

Bei der Herstellung von Blockschaum, z.B. aus Polyurethan (PUR) in einem kontinuierlichen Prozess werden die Reaktivkomponenten Polyol und Isocyanat und weitere Additive wie z.B. Katalysatoren, Stabilisatoren, Treibmittel, Farbstoffe in exakten Mischungsverhältnissen zueinander dosiert, anschließend zu einem Mischer gefördert und dort miteinander vermischt. Gebräuchlich sind dabei Rührermischer, aber auch Statikmischer können verwendet werden. Nach dem Vermischen wird das Reaktivgemisch auf das Bodenpapier eines umlaufenden Trans-portbandes oder wie in Figur 1 dargestellt, auf das über eine Auftragsplatte gezogene Bodenpapier aufgetragen und durch das Transportband in die eigentliche Blockschaumanlage weitergefördert, wo es aufschäumt und ausreagiert. Anschließend wird der so entstandene Schaumstoff zu Blöcken geschnitten und ins Lager transportiert, wo er belüftet wird und auskühlt, bevor er zur weiteren Konfektionierung freigegeben wird.

Bei diesem gesamten Prozess ist die Art und Weise, wie das Reaktivgemisch auf das über dem Transportband bzw. der Auftragsplatte geführte Bodenpapier aufgetragen wird, für die Qualität des anschließend entstehenden Blockschaums von entscheidender Bedeutung. So führen z.B. selbst kleinste Luftbläschen, die beim Auftragen des Reaktivgemisches eingewirbelt oder in Sogzonen eingemischt werden, in dem anschließenden Reaktions- und Treibprozess zu Pinholes und Lunkern und damit minderwertiger Ware.

Ven ganz besonderer Bedeutung ist weiterhin auch folgender Zusammenhang:

Nach dem Mischvorgang, der üblicherweise innerhalb von ca. 0,3 bis 1 s und maximal bis zu 2 s beendet ist, und dem Verstreichen der so genannten Startzeit, beginnt die chemische Reaktion und anschließend die Expansion durch das sich bildende Treibgas. Beim Auftragen des Reaktivgemisches auf das Bodenpapier in einer Quellströmung ergibt sich nun das Problem, dass das Reaktivgemisch in der Mitte des Bodenpapiers gegenüber den Seitenbereichen in Transportrichtung gesehen voreilt. Entgegen der Transportrichtung wird eine Abströmung des Reaktivgemisches durch Strömungsabweiser verhindert.

Zudem sind die Impulskräfte der Strömung in der Mitte in Transportrichtung und an den Seiten gegen die Seitenwände gerichtet. Das verstärkt zusätzlich noch den Effekt des Voreilens der Mittelströmung und hat zur Folge, dass in jeder Ebene senkrecht zur Transportrichtung unterschiedlich altes Gemisch vorliegt. Das wiederum hat die negative Wirkung, dass das ältere Gemisch in den Randbereichen des Bodenpapiers, welches früher reagiert und expandiert, daneben liegendes jüngeres Gemisch nach hinten verschiebt. Diese Schiebungen wiederum führen zu Schlieren, zu unterschiedlichen Dichten, zu unterschiedlichen Zellstrukturen und letztendlich zu Rissen und damit zu Ausschuss.

Um dieser generellen Problematik des Blockschaumprozesses zu begegnen, hat man in den Anfängen dieser Technologie den Mischer senkrecht zur Transportrichtung traversieren lassen. Dies ist einerseits ein enorm großer technischer Aufwand, andererseits aber auch verfahrens-technisch von Nachteil, weil hierbei enorm viel Luft eingeschlagen wird.

Um diesen Mängeln begegnen zu können, hat man versucht, spezielle Auslauf- bzw. Auftragssysteme für das Reaktivgemisch zu entwickeln, um auch mit "stehenden" Mischern einwandfreien Blockschaum produzieren zu können.

So wird z.B. in der DE-OS-27 03 680 ein so genannter "Quer"- oder auch "Gießbalken" beschrieben. Dieser hat sich jedoch technisch nicht durchsetzen können, zum einen weil er nach jedem Schäumprozess mit großem Aufwand auseinandergebaut und gereinigt werden muss, zum anderen aber vor allem weil er zum Zuschäumen speziell an den Enden neigte. Dies ist ganz besonders der Fall, weil auch die Entwicklung der Blockschäume zu höherer Reaktivität verlaufen ist.

In der DE-OS-39 05 914 wird ein weiteres Austragssystem beschrieben. Hierbei wird einem Mischkopf eine Verteilerdüse nachgeschaltet, die durch zwei Seitenwände gebildet wird, die einen schmalen Spalt begrenzen, der nach unten und zur Seite offen ist (Spalte 3, Zeilen 29 bis 31 sowie auch Figuren 1 und 2 der DE-OS-39 05 914).

In Spalte 1, Zeilen 45 bis 48 der DE-OS-39 05 914 wird weiter beschrieben, dass der Strömungswiderstand für den Gemischstrom senkrecht nach unten größer und zur Seite hin geringer ist, so dass ein gleichmäßiger und sehr breiter Fächer entsteht.

Auch dieses Verteilsystem hat sich nicht durchsetzen können. Denn in dem senkrecht nach unten strömenden Reaktivgemisch werden enorm viele Luftbläschen unkontrolliert eingemischt, so dass anschließend in dem aufschäumenden Reaktivgemisch durch das in diese Makro-Luftkeime eindiffundierende Treibgas Pinholes und Lunker entstehen, die zu einem minderwertigen Produkt oder gar zu Ausschuss führen. Dabei erfolgt das unkontrollierte Einmischen von Luftbläschen in das Reaktivgemisch auf vielfältige Weise, zum einen auf Grund der Fallhöhe und das dadurch bewirkte "Aufplatschen", aber auch durch die völlig undefinierte Abströmung auf dem Transportband bzw. dem darüber liegenden Bodenpapier, wobei zwischen Bodenpapier und dem Reaktivgemisch Luftbläschen in das Reaktivgemisch "eingesaugt" werden.

Es besteht also nach wie vor die Aufgabe, ein einfaches und wirtschaftliches Verfahren und eine entsprechende Vorrichtung zur Herstellung von Polyurethan-Blockschaum zur Verfugung zu stellen, bei dem das Auslaufsystem nicht zuschäumt, bei dem PUR-Blockschaum ohne oder mit nur wenigen Lunkern oder Pinholes erhalten werden kann, und bei dem eine homogene Gemischverteilung bewirkt wird, die über die Blockbreite gleich altes Gemisch erzeugt.

Die Erfindung betrifft ein Verfahren zur Herstellung von Polyurethan-Blockschaum, bei dem die Reaktivkomponenten Polyol und Isocyanat dosierend zu einem Mischer gefördert werden, darin vermischt und anschließend aus dem Mischer ausgetragen und auf das Bodenpapier aufgetragen werden, dadurch gekennzeichnet, dass das Reaktivgemisch nach dem Verlassen des Mischers eine unmittelbar oberhalb des Bodenpapiers angeordnete Verteileinrichtung durchströmt, wobei die Strömungsgeschwindigkeiten der am Rand der Verteileinrichtung im Wesentlichen quer zur Transportrichtung ausströmenden Gemischanteile höher sind als die Strömungsgeschwindigkeiten der Gemischanteile, die am in Transportrichtung vorne liegenden Rand der Verteileinrichtung im Wesentlichen in Transportrichtung ausströmen und wobei das Reaktivgemisch die Verteileinrichtung in Form eines Films verlässt, welcher nur an der Oberseite eine Grenzfläche mit der Umgebungsatmosphäre ausbildet.

Bevorzugt ist ein Verfahren, bei dem das Reaktivgemisch nach dem Verlassen des Mischers die unmittelbar oberhalb des Bodenpapiers angeordnete Verteileinrichtung durchströmt, mit der das Reaktivgemisch im Wesentlichen parallel zu der Oberfläche des Bodenpapiers geführt wird.

Das Bodenpapier ist dabei üblicherweise die Papierbahn oder andere geeignete Trennbahn, die auf dem Transportband und/oder auf der Auftragsplatte aufliegt und darüber geführt wird. Das Bodenpapier kann somit ggf. auch aus einem anderen Werkstoff als Papier bestehen.

In dem erfindungsgemäßen Verfahren wird das Reaktivgemisch nach dem Verlassen der Mischzone bzw. eines daran anschließenden Gemischauslaufkanals so geführt, dass es unmittelbar über dem Bodenpapier (d.h. auch unmittelbar über dem Transportband bzw. der Auftragsplatte) in Atmosphärenumgebung abströmt, wobei es eine Verteileinrichtung (Verteilzunge) passiert. Bevorzugt strömt dabei das Reaktivgemisch parallel zu der Oberfläche des Bodenpapiers (bzw. des Transportbands bzw. der Auftragsplatte) ab. Die Verteileinrichtung bewirkt, dass die Strömungsgeschwindigkeiten der am Rand der Verteileinrichtung im wesentlichen quer zur Transportrichtung ausströmenden Gemischanteile höher sind als die Strömungsgeschwindigkeiten der im zentralen Bereich der Verteileinrichtung in Transportrichtung ausströmenden Gemischanteile und zwar bevorzugt um den Faktor 1,5 bis 200, besonders bevorzugt um den Faktor 2,0 bis 100, ganz besonders bevorzugt um den Faktor 2,5 bis 50. Das bewirkt, dass sich nach Verlassen der Verteileinrichtung eine Gemischverteilung mit einer über der Breite des Bodenpapiers konstanten Schichtstärke einstellt und sich das Reaktivgemisch in einer Parallelströmung mit über der Breite des Bodenpapiers konstanten Geschwindigkeit bewegt, wobei die Geschwindigkeit der Strömung der Transportgeschwindigkeit des Transportbandes bzw. des Bodenpapiers entspricht. Das heißt auch, dass dann zwischen Bodenpapier und Reaktivgemisch keine Relativgeschwindigkeit mehr vorhanden ist.

Die Verteileinrichtung ist unmittelbar oberhalb des Bodenpapiers angeordnet, d. h. vorzugsweise in einem Abstand von bis zu 50 mm, besonders bevorzugt von weniger als 10 mm.

Auf diese Weise wird erreicht, dass über der Blockbreite gesehen in jeder Ebene gleich altes Gemisch bei konstanter Schichtdicke vorliegt, so dass beim Reaktions- und Treibprozess keinerlei Schiebungen entgegen der Transportrichtung entstehen können und dass das expandierende Gemisch ausschließlich nach oben steigen kann. Somit kann auf diese Weise Blockschaum ohne Schlieren, ohne Zellstörungen, ohne Dichteunterschiede und ohne Risse produziert werden.

Mit diesem Verfahren ist es weiterhin möglich, auch Pinhole- und Lunker-freien Blockschaum zu produzieren, weil die geführte Abströmung des Reaktivgemisches in den Atmosphärenbereich unmittelbar über dem Bodenpapier ohne jegliches "Aufplatschen" erfolgt, so dass ein Einwirbeln von Luftbläschen in das Reaktivgemisch nicht möglich ist. Daher verlässt das Reaktivgemisch erfindungsgemäß die Verteileinrichtung in Form eines Films, welcher nur einseitig an der Oberseite eine Grenzfläche mit der Umgebungsatmosphäre ausbildet.

Die Erfindung betrifft auch eine Vorrichtung zur Herstellung von Polyurethan-Blockschaum umfassend Vorratsbehälter für die Reaktivkomponenten Polyol und Isocyanat, Pumpen und Leitungen für die Dosierung der Reaktivkomponenten aus den Vorratsbehältern zu einem Mischer, ein Transportband und/oder eine Auftragsplatte, über welche ein Bodenpapier geführt wird, auf welches das Reaktivgemisch aufgetragen wird, dadurch gekennzeichnet, dass zwischen Mischer und Bodenpapier eine Verteileinrichtung angeordnet ist, welche einen Spalt definiert, den das Reaktivgemisch durchströmt, und welcher unmittelbar oberhalb des Bodenpapiers angeordnet ist, wobei die Verteileinrichtung das Bodenpapier berührt. Die erfindungsgemäße Vorrichtung wird bevorzugt in dem erfindungsgemäßen Verfahren eingesetzt.

In einer bevorzugten Ausführungsform ist der Spalt, den das Reaktivgemisch vor Austritt aus der Verteileinrichtung durchströmt, im Wesentlichen parallel zu dem Bodenpapier ausgerichtet.

Erfindungsgemäß ist der Mischzone bzw. dem Gemischauslaufkanal eine Verteileinrichtung nachgeschaltet, welche in etwa die Kontur einer Zunge besitzen kann und welche einen Spalt definiert, den das Reaktivgemisch vor dem Ausströmen in die Atmosphärenumgebung passieren muss, welcher unmittelbar über dem Transportband bzw. der Auftragsplatte angeordnet ist. Bevorzugt verläuft der Spalt, den das Reaktivgemisch vor dem Ausströmen in die Atmosphärenumgebung passieren muss, im Wesentlichen parallel zum Bodenpapier, d. h. auch im wesentlichen parallel zu dem Transportband bzw. einer Auftragsplatte. Dabei kann der Querschnitt des Spalts so gestaltet sein, dass der obere und der untere Teil der Verteileinrichtung parallel zueinander oder auch nach vorne, d.h. in Transportrichtung gesehen, konisch zulaufend, angeordnet sind. Auch konturierte Oberflächen, insbesondere bei der Innenseite des oberen Teils der Verteileinrichtung sind möglich.

Die Verteileinrichtung kann auch so ausgestaltet sein, dass die Unterseite der Verteileinrichtung, d.h. die dem Bodenpapier zugewandte Seite der Verteileinrichtung, in Transportrichtung und ggf. auch quer zur Transportrichtung weiter ausgedehnt ist als die Oberseite der Verteileinrichtung. Das Reaktivgemisch strömt dann aufgrund der unterschiedlichen Ausdehnung von Unterseite und Oberseite der Verteileinrichtung aus einer gegen die Vertikale geneigten Austrittsöffnung aus der Verteileinrichtung aus.

Dabei beträgt das Verhältnis der Breite b der Verteileinrichtung zur Breite B des erzeugten PUR-Schaumblocks (d.h. auch der Breite des Transportbandes) bevorzugt. 0,001 bis 0,8, besonders bevorzugt 0,005 bis 0,3, ganz besonders bevorzugt von 0,01 bis 0,1.

Das Verhältnis der Länge 1 der Verteileinrichtung (in Transportrichtung) zur Breite b der Verteileinrichtung (quer zur Transportrichtung) beträgt bevorzugt 0,5 bis 20, besonders bevorzugt 0,8 bis 10, ganz besonders bevorzugt 1 bis 5.

In einer speziellen Ausgestaltung der Vorrichtung besteht die Verteileinrichtung aus einem unteren und einem oberen Teil, wobei der untere Teil ein Blech umfasst, welches gegenüber dem Bodenpapier geneigt ist und welches am Übergang zum Bodenpapier mit diesem eine gerade Übergangskante ausbildet. Der den Verteilspalt verlassende Flüssigkeitsfilm fließt dann zunächst auf dem Blech weiter bevor er über diese Kante auf das Bodenpapier fließt. Am Übergang des Bleches zum Bodenpapier ist bevorzugt eine flexible Dichtlippe oder eine überlappende Folie angebracht.

In einer weiteren speziellen Ausgestaltung der Vorrichtung besteht die Verteileinrichtung aus einem unteren und einem oberen Teil, wobei der untere Teil durch das Transportband und/oder die Auftragsplatte selbst und das darüber liegende Bodenpapier gebildet wird. Dabei ist es wichtig, dass im rückwärtigen Bereich der Verteileinrichtung zwischen Verteileinrichtung und Transportband und/oder der Auftragsplatte bzw. dem darüber liegenden Bodenpapier ein Dichtelement (z.B. in Form einer Dichtlippe) angeordnet ist.

Eine weitere spezielle Ausgestaltung der Vorrichtung stellt eine Kombination der beiden zuvor beschriebenen Ausgestaltungen dar. Dabei besitzt die obere Verteilzunge genau an der Übergangskante des Unterblechs zum Bodenpapier einen Knick, so dass der untere Teil der Verteilvorrichtung zum Teil durch das Blech und zum Teil durch das Transportband und/oder die Auftragsplatte und das darüber liegende Bodenpapier selbst gebildet wird. Dadurch wird einerseits verhindert, dass ein zu hoher Druck auf das Papier wirken kann und andererseits wird verhindert, dass das Blech zu breit wird.

In einer weiteren Ausgestaltung ist die Distanz h zwischen Oberkante der Verteileinrichtung und Unterkante der Verteileinrichtung verstellbar.

Bevorzugt ist die Kontur des Spaltes an mehreren Stellen einstellbar, so dass auch bei verschiedenen Schäumbreiten, Mengen und Viskositäten eine möglichst optimale Gemischverteilung erzielt werden kann, ohne dafür die Verteileinrichtung wechseln zu müssen. Dafür ist das obere Teil der Verteileinrichtung bevorzugt durch die Verstellbarkeit des Spaltes den Gegebenheiten anpassbar.

Die Symmetrieachse der Mischzone im Mischer bzw. des Gemischauslaufkanals bildet mit der Ebene des Spalts der Verteileinrichtung bevorzugt einen Winkel von 5° bis 175°, besonders bevorzugt von 45° bis 135°, ganz besonders bevorzugt von 80° bis 100°.

In einer besonderen Ausgestaltung dieser Vorrichtung ist dieser Winkel auch verstellbar.

Im Übergangsbereich von der Mischzone bzw. dem Gemischauslaufkanal zur Verteileinrichtung können Füllstücke platziert werden, um Totzonen zu eliminieren bzw. um den Strömungsverlauf optimal zu gestalten.

Die Erfindung wird anhand der folgenden Abbildungen näher erläutert. Es zeigen:
- Fig. 1: eine schematische Darstellung einer Blockschaumanlage nach dem Stand der Technik.
- Fig. 2: eine erfindungsgemäße Vorrichtung im Schnitt C÷C und
- Fig. 3: die gleiche Vorrichtung wie in Figur 2 im Schnitt B÷B.
- Fig. 4: zeigt eine Variante der erfindungsgemäßen Vorrichtung, wobei der untere Teil der Verteileinrichtung durch die Auftragsplatte selbst gebildet wird.

Die Figuren 5 bis 9 zeigen Varianten von Verteileinrichtung.

Figur 1 zeigt eine Anlage zur Herstellung von PUR-Blockschaum nach dem Stand der Technik. Dabei werden die Reaktivkomponenten Polyol und Isocyanat sowie die Additive in exakten Mischungsverhältnissen mittels Dosierpumpen (nicht dargestellt) kontinuierlich zu einem Mischer 1 gefördert, darin vermischt und über einen Auslaufkanal 2 auf das Bodenpapier 3, welches durch das Transportband 4 über die Auftragsplatte 5 gezogen wird, aufgetragen, und danach durch das Transportband 4 in die eigentliche Blockschaumanlage weitergefördert, wo es aufschäumt und ausreagiert. Der Pfeil 16 zeigt dabei die Transportrichtung des Transportbandes an. Anschließend wird der so entstandene Schaumstoff mittels einer Sägevorrichtung 15 zu Blöcken geschnitten und in ein Lager transportiert.

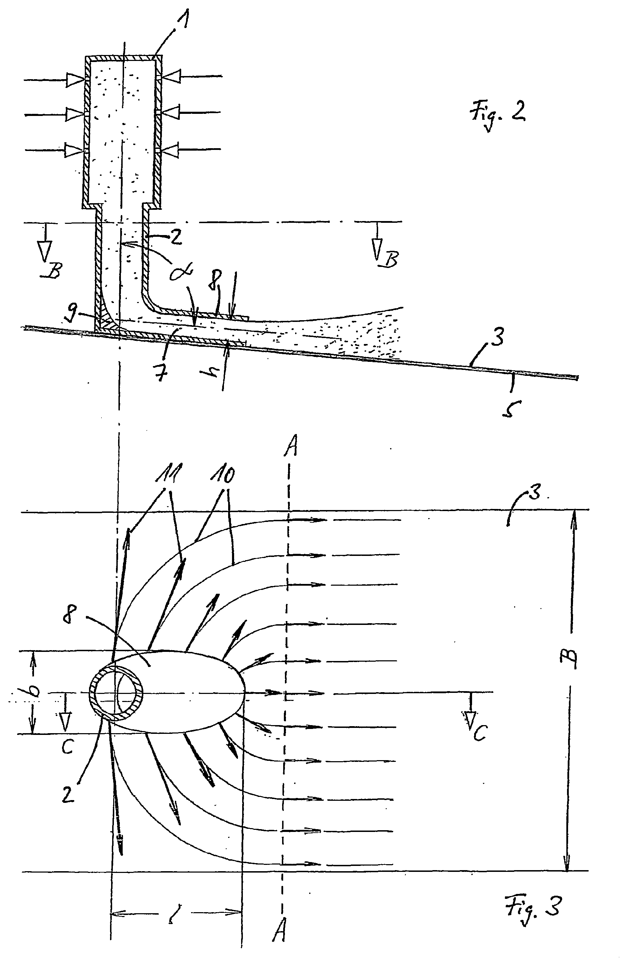

Figur 2 zeigt eine erfindungsgemäße Vorrichtung im Schnitt C÷C (die Lage des Schnitts C÷C ist in Figur 3 dargestellt). Die Reaktivkomponenten Polyol und Isocyanat sowie die Additive werden in exakten Mischungsverhältnissen kontinuierlich in den Mischer 1 gefördert und darin vermischt.

Nach einer Durchlaufzeit von ca. 0,3 bis 1 s , maximal 2 s verlässt das Reaktivgemisch den Mischer 1 über den Gemischauslaufkanal 2. Anschließend wird die fertige Reaktivmischung so geführt, dass sie unmittelbar über der Auftragsplatte 5 parallel zu der Auftragsplatte abströmt.

Das erfolgt, indem die Reaktivmischung den Spalt 7 der Verteileinrichtung 8 durchströmt. Die Abströmung des Reaktivgemisches erfolgt dabei ohne "Aufplatschen" und somit ohne jegliches Einschlagen von Luftbläschen. Dabei verlässt das Reaktivgemisch die Verteileinrichtung 8 in Form eines Films, welcher nur einseitig, und zwar an der Oberseite, eine Grenzfläche mit der Umgebungsatmosphäre ausbildet. Um Strömungstotzonen zu eliminieren, ist im Einlauf der Verteilzunge ein Füllstück 9 angeordnet.

Figur 3 zeigt die in Figur 2 dargestellte erfindungsgemäße Vorrichtung, jedoch im Schnitt B÷B. Wesentlich in dieser Figur ist die Darstellung der Stromlinien 10 des abströmenden Reaktivgemischs.

Weiterhin wird durch die den Stromlinien 10 zugeordneten Geschwindigkeitsvektoren 11 aufgezeigt, dass die Strömungsgeschwindigkeiten der am Rand der Verteileinrichtung 8 im wesentlichen quer zur Transportrichtung ausströmenden Gemischanteile deutlich höher sind als die Strömungsgeschwindigkeiten der im zentralen Bereich der Verteilzunge in Transportrichtung ausströmenden Gemischanteile. Dadurch wird bewirkt, dass über der gesamten Blockbreite B in der Ebene A÷A überall gleich altes Gemisch bei konstanter Schichtdicke vorliegt. Das Breitenverhältnis b/B liegt in diesem Beispiel bei ca. 0,2 und das 1/b-Verhältnis bei ca. 2.

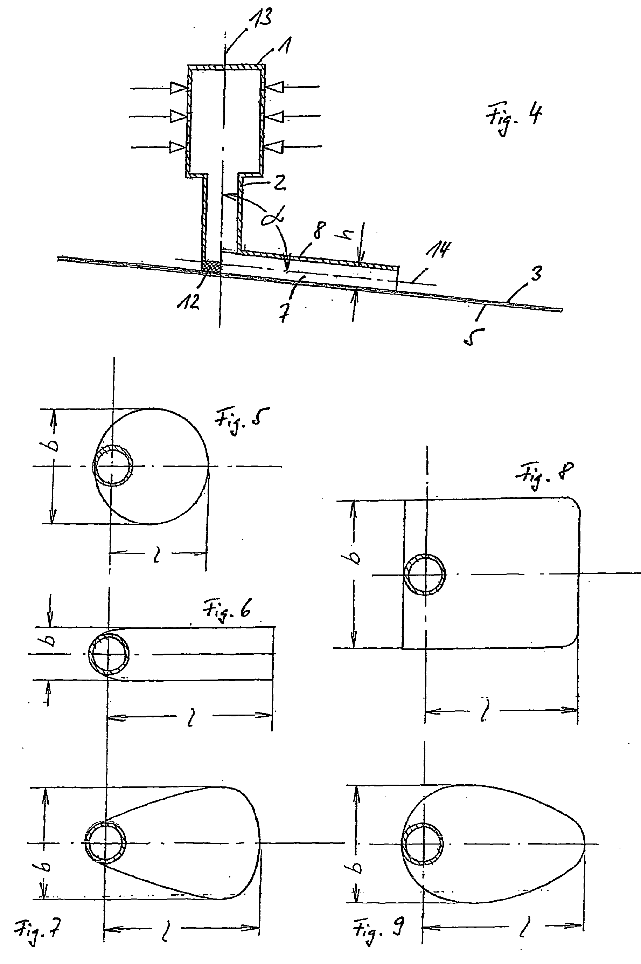

Figur 4 zeigt eine Variante der erfindungsgemäßen Vorrichtung, bei der die Verteileinrichtung 8 aus einem oberen und einem unteren Teil besteht, wobei der untere Teil der Verteileinrichtung 8 durch die Auftragsplatte 5 selbst und das darüber angeordnete Bodenpapier 3 gebildet wird. Bei dieser Ausführung ist im rückwärtigen Bereich der Verteileinrichtung 8 zwischen Verteileinrichtung 8 und Auftragsplatte 5 ein Dichteelement 12 angeordnet.

Die Symmetrieachse 13 des Mischers 1 sowie des Gemischauslaufkanals 2 und die Ebene 14 der Verteileinrichtung 8 bilden miteinander den Winkel α. Dieser Winkel kann auch verstellbar sein (im Detail nicht dargestellt), um das System an sich ändernde Auftragsplattenneigungen anpassen zu können.

Die Figuren 5, 6, 7, 8 und 9 zeigen Ausführungsbeispiele verschiedener Verteileinrichtung 8, wobei nicht nur die Form, sondern auch die Verhältniszahlen 1/b und b/B variabel sein können.

Das neue Verfahren und die neue Vorrichtung sind variabel einsetzbar. Es ist nämlich unerheblich, ob das Bodenpapier, auf welches das Reaktivgemisch aufgetragen wird, unter dem Mischkopf bzw. dem Austragsorgan in einer vorgegebenen Transportrichtung hinweggezogen wird, oder ob bei so genannten stationären Blockschäumanlagen sich der Mischkopf bzw. das Austragsorgan über dem fest liegenden Bodenpapier hinwegbewegt.

## Patentansprüche

1. Verfahren zur Herstellung von Polyurethan-Blockschaum, bei dem die Reaktivkomponenten Polyol und Isocyanat dosierend zu einem Mischer (1) gefördert werden, darin vermischt und anschließend aus dem Mischer ausgetragen und auf das Bodenpapier (3) aufgetragen werden, **dadurch gekennzeichnet, dass** das Reaktivgemisch nach dem Verlassen des Mischers eine unmittelbar oberhalb des Bodenpapiers angeordnete Verteileinrichtung (8) durchströmt, wobei die Strömungsgeschwindigkeiten der am Rand der Verteileinrichtung im Wesentlichen quer zur Transportrichtung ausströmenden Gemischanteile höher sind als die Strömungsgeschwindigkeiten der Gemischanteile, die am in Transportrichtung vorne liegenden Rand der Verteileinrichtung (8) im Wesentlichen in Transportrichtung ausströmen, und wobei das Reaktivgemisch die Verteileinrichtung (8) in Form eines Films verlässt, welcher nur an der Oberseite eine Grenzfläche mit der Umgebungsatmosphäre ausbildet.

2. Verfahren nach Anspruch 1, **dadurch gekennzeichnet, dass** die Strömungsgeschwindigkeiten der am Rand der Verteileinrichtung (8) im wesentlichen quer zur Transportrichtung ausströmenden Gemischanteile um den Faktor 1,5 bis 200, bevorzugt um den Faktor 2,0 bis 100, besonders bevorzugt um den Faktor 2,5 bis 50 größer sind als die Strömungsgeschwindigkeiten der Gemischanteile, die am in Transportrichtung vorne liegenden Rand im Wesentlichen in Transportrichtung ausströmen.

3. Verfahren nach Anspruch 1 oder 2, **dadurch gekennzeichnet, dass** das Reaktivgemisch bei der Durchströmung der Verteileinrichtung im Wesentlichen parallel zur Oberfläche des Bodenpapiers geruhrt wird.

4. Vorrichtung zur Herstellung von Polyurethan-Blockschaum umfassend Vorratsbehälter für die Reaktivkomponenten Polyol und Isocyanat, Pumpen und Leitungen für die Dosierung der Reaktivkomponenten aus den Vorratsbehältern zu einem Mischer (1), ein Transportband (4) und/oder eine Auftragsplatte (5), über welche ein Bodenpapier (3) geführt wird, auf welches das Reaktivgemisch aufgetragen wird, **dadurch gekennzeichnet, dass** zwischen Mischer (1) und Bodenpapier (3) eine Verteileinrichtung (8) angeordnet ist, welche einen Spalt (7) definiert, den das Reaktivgemisch durchströmt, und welcher unmittelbar oberhalb des Bodenpapiers (3) angeordnet ist, wobei die Verteileinrichtung das Bodenpapier berührt.

5. Vorrichtung nach Anspruch 4, **dadurch gekennzeichnet, dass** das Verhältnis der Breite b der Verteileinrichtung (8) zur Breite B des erzeugten Blockschaums 0,001 bis 0,8, bevorzugt 0,005 bis 0,3, besonders bevorzugt 0,01 bis 0,1 beträgt.

6. Vorrichtung nach einem der Ansprüche 4 oder 5, **dadurch gekennzeichnet, dass** das Verhältnis der Länge 1 der Verteileinrichtung (8) zur Breite b der Verteileinrichtung (8) 0,5 bis 20, bevorzugt 0,8 bis 10, besonders bevorzugt 1,0 bis 5 beträgt.

7. Vorrichtung nach einem der Ansprüche 4 bis 6, **dadurch gekennzeichnet, dass** die Verteileinrichtung (8) aus einem oberen Teil und einem unteren Teil gebildet wird, wobei der untere Teil durch das Transportband (4) und/oder die Auftragsplatte (5) und das darüber liegende Bodenpapier (3) gebildet wird.

8. Vorrichtung nach Anspruch 7, **dadurch gekennzeichnet, dass** im rückwärtigen Bereich der Verteileinrichtung (8) zwischen Verteileinrichtung (8) und dem Bodenpapier (3) ein Dichteelement (12) angeordnet ist.

9. Vorrichtung nach einem der Ansprüche 4 bis 8, **dadurch gekennzeichnet, dass** die Distanz h zwischen Oberkante der Verteileinrichtung (8) und Unterkante der Verteileinrichtung (8) verstellbar ist.

10. Vorrichtung nach einem der Ansprüche 4 bis 9, **dadurch gekennzeichnet, dass** der Winkel α zwischen der Symmetrieachse (13) der Mischzone oder des Gemischauslaufkanals (2) und der Ebene der Verteileinrichtung (8) 5° bis 175°, bevorzugt 45° bis 135°, besonders bevorzugt 80° bis 100° beträgt und dass dieser Winkel α verstellbar ist.

## Claims

1. Process for the production of polyurethane block foam, in which the reactive components polyol and isocyanate are conveyed in a metered fashion to a mixer (1), are mixed therein and are then discharged from the mixer and are applied to a substrate (3), **characterized in that** the reactive mixture after having left the mixer flows through a distributor device (8) being arranged immediately above the substrate, wherein the flow velocities of the mixture portions flowing from the distributor device's edge substantially transversely to the transport direction is higher than the flow velocities of the mixture portions flowing from the distributor device's (8) leading edge in the transport direction substantially in transport direction, and wherein the reactive mixture leaves the distributor device (8) in form of a film which forms a boundary face with the ambient atmosphere on only the upper side.

2. Process according to Claim 1, **characterized in that** the flow velocities of the mixture portions flowing from the distributor device's (8) edge substantially transversely to the transport direction is higher than the flow velocities of the mixture portions flowing from leading edge in the transport direction by a factor of from 1.5 to 200, preferably by a factor of from 2.0 to 100, specifically preferred by a factor of from 2.5 to 50.

3. Process according to Claim 1 or 2, **characterized in that** the reactive mixture is guided during the flow through the distributor device substantially parallel to the surface of the substrate.

4. Device for the production of a polyurethane block foam having a reservoir for the reaction components polyol and isocyanate, pumps and conduits for metering of the reactive components from the reservoirs to a mixer (1), a conveyor belt (4) and/or an application plate (5), above which a substrate (3) is guided, on which the reactive mixture is applied, **characterized in that** between the mixer (1) and the substrate (3) a distributor device (8) is arranged, which defines a gap (7), through which the reactive mixture flows, and which is arranged immediately above the substrate (3), wherein the distributor device contacts the substrate.

5. Device according to Claim 4, **characterized in that** the ratio of the width b of the distributor device (8) to the width B of the produced block foam is between 0.001 and 0.8, preferably between 0.005 and 0.3, specifically preferred between 0.01 and 0.1.

6. Device according to one of Claims 4 or 5, **characterized in that** the ratio of the length 1 of the distributor device (8) to the width b of the distributor device (8) is between 0.5 and 20, preferably between 0.8 and 10, specifically preferred between 1.0 and 5.

7. Device according to one of Claims 4 till 6, **characterized in that** the distributor device (8) is formed by an upper part and a lower part, wherein the lower part is formed by the conveyor belt (5) and/or the application plate (5) and the substrate (3) being arranged above it.

8. Device according to Claim 7, **characterized in that** in a rearward area of the distributor device (8) between the distributor device (8) and the substrate (3) a sealing device (12) is arranged.

9. Device according to one of Claims 4 till 8, **characterized in that** the distance h between the upper edge of the distributor device (8) and the lower edge of the distributor device (8) is adjustable.

10. Device according to one of Claims 4 till 9, **characterized in that** the angle α between the symmetry axis (13) of the mixing zone or the discharge channel (2) for the mixture and of the distributor device's (8) plane is between 5° and 175°, preferably between 45° and 135°, specifically preferred between 80° and 100°, and that this angle α is adjustable.

## Revendications

1. Procédé pour produire des blocs en mousse de polyuréthane, dans lequel les composants de réaction polyol et isocyanate sont amenés par dosage à un mélangeur (1), y sont mélangés et ensuite sont ressortis du mélangeur et appliqués sur le papier de base (3), **caractérisé en ce que** le mélange réactionnel, après avoir quitté le mélangeur, traverse un dispositif de distribution (8) disposé directement au-dessus du papier de base, les vitesses d'écoulement des proportions du mélange s'écoulant essentiellement transversalement à la direction de transport au bord du dispositif de distribution étant plus élevées que les vitesses d'écoulement des proportions du mélange s'écoulant essentiellement dans la direction de transport bord avant dans la direction de transport du dispositif de distribution (8), le mélange réactionnel quittant le dispositif de distribution (8) sous forme de film qui constitue, seulement à la surface, une surface limite avec l'atmosphère environnante.

2. Procédé selon la revendication 1, **caractérisé en ce que** les vitesses d'écoulement des proportions du mélange s'écoulant au bord du dispositif de distribution (8) essentiellement transversalement à la direction de transport sont plus élevées d'un facteur de 1,5 à 200, de préférence d'un facteur de 2,0 à 100, particulièrement préférablement d'un facteur de 2,5 à 50, aux vitesses d'écoulement des proportions du mélange qui s'écoulent essentiellement dans la direction de transport au bord avant dans la direction de transport.

3. Procédé selon la revendication 1 ou 2, **caractérisé en ce que** le mélange réactionnel est agité lors de son passage à travers le dispositif de distribution essentiellement parallèlement à la surface du papier de base.

4. Dispositif pour produire des blocs en mousse de polyuréthane, comprenant des réservoirs pour les composants de réaction polyol et isocyanate, des pompes et des conduites pour le dosage des composants de réaction provenant des réservoirs et introduits dans un mélangeur (1), une bande transporteuse (4) et/ou une plaque d'enduction (5), sur laquelle est guidé un papier de base (3), sur lequel est appliqué le mélange réactionnel, **caractérisé en ce qu'**entre le mélangeur (1) et le papier de base (3) est disposé un dispositif de distribution (8) qui définit une fente (7) à travers laquelle passe le mélange réactionnel, et qui est disposée directement au-dessus du papier de base (3), le dispositif de distribution étant en contact avec le papier de base.

5. Dispositif selon la revendication 4, **caractérisé en ce que** le rapport de la largeur b du dispositif de distribution (8) à la largeur B du bloc de mousse produit est de 0,001 à 0,8, de préférence de 0,005 à 0,3, et particulièrement préférablement de 0,01 à 0,1.

6. Dispositif selon l'une quelconque des revendications 4 ou 5, **caractérisé en ce que** le rapport de la longueur 1 du dispositif de distribution (8) à la largeur b du dispositif de distribution (8) est de 0,5 à 20, de préférence de 0,8 à 10, particulièrement préférablement de 1,0 à 5.

7. Dispositif selon l'une quelconque des revendications 4 à 6, **caractérisé en ce que** le dispositif de distribution (8) est formé d'une partie supérieure et d'une partie inférieure, la partie inférieure étant formée par la bande transporteuse (4) et/ou la plaque d'enduction (5) et le papier de base (3) posé dessus.

8. Dispositif selon la revendication 7, **caractérisé en ce que** dans la région arrière du dispositif de distribution (8) entre le dispositif de distribution (8) et le papier de base (3) est disposé un élément d'étanchéité (12).

9. Dispositif selon l'une quelconque des revendications 4 à 8, **caractérisé en ce que** la distance h entre l'arête supérieure du dispositif de distribution (8) et l'arête inférieure du dispositif de distribution (8) est réglable.

10. Dispositif selon l'une quelconque des revendications 4 à 9, **caractérisé en ce que** l'angle α entre l'axe de symétrie (13) de la zone de mélange ou du canal de sortie du mélange (2) et le plan du dispositif de distribution (8) est compris entre 5° et 175°, de préférence entre 45° et 135°, particulièrement préférablement entre 80° et 100°, et cet angle α est réglable.
